Europäisches Patentamt

European Patent Office

Office européen des brevets

(11) Publication number: **0 019 748**
**A1**

(12) # EUROPEAN PATENT APPLICATION

(21) Application number: **80102441.5**

(22) Date of filing: **05.05.80**

(51) Int. Cl.³: **B 29 D 27/00**

(30) Priority: **11.05.79 JP 56982/79**

(43) Date of publication of application: **10.12.80**
**Bulletin 80/25**

(84) Designated Contracting States: **BE DE FR GB IT NL**

(71) Applicant: **NISSHIN SPINNING CO., LTD., 3-10, Yokoyama-cho Nihonbashi, Chuo-ku, Tokyo (JP)**

(72) Inventor: **Suzuki, Toshio, 5-3-12, Nishiaraihoncho, Adachi-ku, Tokyo (JP)**
Inventor: **Morimoto, Kiyotake, 5-3-12, Nishiaraihoncho, Adachi-ku, Tokyo (JP)**
Inventor: **Kato, Yoshihiko, 1-16-2-3, Nishiaraisakaecho, Adachi-ku, Tokyo (JP)**

(74) Representative: **Kraus, Walter, Dr. et al, Patentanwälte Dres. Kraus & Weisert Irmgardstrasse 15, D-8000 München 71 (DE)**

(54) Method of producing a fibre-reinforced resin foam and fibre-reinforced resin foam.

(57) A process for producing a fiber-reinforced resin foam, which comprises compressing a bulky fibrous assembly until the volume of its void spaces becomes substantially equal to the volume of a resin foam chemical mixture to be impregnated and substantially filling the void spaces of the compressed fibrous assembly with said resin foam chemical mixture, thereafter expanding the impregnated resin foam chemical mixture at a rate smaller than its rate of free expansion while placing the fibrous assembly under pressure, and then curing the foam; and a laminated resin foam article composed of

(A) a composite resin foam layer having a substantially uniform density throughout the layer, said layer comprising an open-cellular flexible porous material and a resin foam expanded and cured within the open cells of the porous material, and

(B) a fiber-reinforced resin foam layer adjacent to the composite resin foam layer (A), said layers (A) and (B) being integrally laminated by simultaneous expansion and foaming.

- 1 -

This invention relates to a resin foam which is reinforced with fibers. More specifically, this invention relates to a fiber-reinforced resin foam composed of a resin foam such as a polyurethane foam or polyester foam and relatively large amounts of inorganic or organic fibers uniformly dispersed therein, and to a process for production thereof.

Resin foams such as polyurethane foams, polystyrene foams and polyester foams are used extensively as thermal and acoustic insulating materials because of their superior properties such as high thermal insulating property, light weight and high sound shielding and absorbing properties. On the other hand, these resin foams generally have low mechanical strength, dimensional stability and fire retardancy, which limit their satisfactory application in fields that require high mechanical strength, dimensional stability and fire retardancy, for example as high-load-bearing members in building materials.

One method for removing this defect would be to incorporate reinforcing fibers such as glass fibers, carbon fibers, polyester fibers, polyamide fibers and polyolefin fibers in the resin foams, as in ordinary FRP (fiber-reinforced plastics), to improve their mechanical properties such as compressive strength and flexural strength and reduce their coefficient of linear thermal expansion.

Usually, these resin foams are produced by subjecting a foam chemical mixture (which is a mixture of foam chemicals consisting of at least two foam-making chemicals to polymerization, condensation or polycondensation and to gas generation. Considerable technical difficulties are encountered, however, in incorporating sufficient amounts of the reinforcing fibers uniformly in the foam chemical mixture. For example, mere addition of the reinforcing fibers to the foam chemical mixture renders the viscosity of the mixture extremely high, and the individual chemicals in the mixture are difficult to mix uniformly. As a result, it is virtually impossible to obtain a satisfactory foam product. Even if the amount of the reinforcing fibers to be added is decreased at the sacrifice of the effect of improving the aforesaid properties, it is very difficult to mix the reinforcing fibers intimately with the individual ingredients of the liquid mixture. In order to achieve uniform dispersion of the reinforcing fibers, the length of the fibers should be made extremely short, but this nullifies the addition of the fibers for reinforcing purposes.

In an attempt to avoid the aforesaid technical difficulties in including reinforcing fibers in resin foams, Japanese Patent Publication No. 8386/72 discloses a process which comprises applying a jet stream of a urethane foam chemical mixture to fibers having a length of at least 10 mm substantially uniformly while blowing the fibers by an air stream to form a random web, and then foaming and expanding the urethane foam mixture in the random web to distribute the fibers uniformly in the urethane foam. The fiber-urethane foam composite obtained by the method of this Patent Publication has the defect that it tends to include non-uniform and large cells and the fibers tend to be localized within the foam, thus making it impossible to obtain a smooth surface and a uniform thickness. Moreover, this method requires complex equipment and cannot be applied to the incorporation of continuous long fibers into urethane foams.

0019748

Japanese Patent Publication No. 30137/73 discloses a process for continuously producing a fiber-reinforced foam resin article which comprises continuously advancing a number of long fibers aligned parallel to each other, impregnating them with a foam chemical mixture, and allowing the impregnated fiber bundle to advance at such a speed that the fiber bundle resides in a molding cylinder provided ahead in the advancing path of the fiber bundle during the period ranging from the cream time of the liquid mixture to the completion of its expansion. The resin foam reinforced by this process is reinforced only in one axial direction, and both the function of the fibers to reinforce the foam and the utility of the product are markedly restricted. Furthermore, this process is economically disadvantageous because it requires a special sophisticated aparatus for feeding a bundle of continuous long fibers and passing the foam chemical mixture-impregnated fiber bundle through the molding cylinder.

It is an object of this invention therefore to provide a process for producing by a very simple means a resin foam highly reinforced with fibers in which sufficient amounts of the reinforcing fibers are dispersed uniformly.

The above object is achieved in accordance with this invention by a process for producing a fiber-reinforced resin foam, which comprises compressing a bulky fibrous assembly until the volume of its void spaces becomes substantially equal to the volume of a resin foam chemical mixture to be impregnated and substantially filling the void spaces of the compressed fibrous assembly with said foam chemical mixture, thereafter expanding the foam chemical mixture at a rate smaller than the rate of its free expansion while placing the impregnated fibrous assembly under pressure, and then curing the foam.

The present invention is described below in detail with reference to the accompanying drawings in which:

- 4 -

Figure 1 is a graph showing the relation between the void ratio of a fibrous assembly during compression and the fiber content of a fiber-reinforced resin foam as a final product;

Figure 2 is a graph showing the relation between the total expansion ratio of a fiber-reinforced resin foam as a final product and its fiber content;

Figure 3 is a graph showing the relation between the expansion ratio of a foam chemical mixture and the total expansion ratio of a fiber-reinforced resin foam as a final product;

Figure 4 is a flowsheet showing the batchwise operation of the process of this invention; and

Figure 5 is a schematic view of an apparatus for use in continuous practice of the process of this invention.

The process of this invention is described in detail hereinbelow.

The first step of the process of this invention comprises compressing a bulky fibrous assembly until the volume of its voids becomes substantially equal to the volume of a foam chemical mixture to be impregnated, and substantially completely filling the voids of the compressed fibrous assembly with the foam chemical mixture.

The "bulky fibrous assembly" used in the first step may comprise continuous filaments, short fibers or staples, spun yarns or mixtures thereof. In the fibrous assembly, these fibers or yarns may simply be entangled loosely, or they may be bonded or interwoven of interknitted roughly to such an extent that the foaming and expanding of the impregnated foam chemical mixture is not substantially hampered and the relative positions of the fibers can be easily changed.

There is no particular restriction on the fibers which constitute such a fibrous assembly, and these fibers can be selected from a wide range of fibers. For example, these fibers include inorganic fibers such as glass fibers, carbon fibers, asbestos fibers, metal fibers and ceramic fibers; natural organic fibers such as cotton, flax, hemp palm, coconut, bamboo, silk and wool; and regenerated and synthetic organic fibers such as rayon, polyester, polyamide, acrylic, polyolefin, polyvinyl alcohol, polyvinyl chloride, polyvinylidene chloride and polytetrafluoroethylene fibers. These fibers can be used either singly or as a mixture of two or more types. The inorganic fibers, especially glass fibers and carbon fibers, are preferred.

Preferably, these fibers have good affinity for the resin foam chemical mixture to be impregnated. Suitable fibers have a fiber length of at least 2 mm, preferably at least 5 mm, and are preferably in the form of continuous filaments. The size of the fibers is usually 1 to 10000 denier, preferably 10 to 2000 denier.

The fibrous assembly may be in a variety of forms, for example a mere entangled assembly of fibers such as a batt, fleece or nonwoven fabric, or a laminate of nonwoven sheets, nonwoven webs, net-like goods, coarse woven or knitted fabrics.

Desirably, the fibrous assembly has sufficient bulkiness, and it is generally advantageous that the fibrous assembly has a void ratio of at least 0.5, preferably at least 0.7, and more preferably at least 0.9.

The "void ratio", as used in the present application, denotes the ratio of the volume of spaces in the fibrous assembly which communicate with the outer atmosphere to the total apparent volume of the fibrous assembly.

$$\text{Void ratio} = \frac{\text{Volume of spaces in the fibrous assembly which communicate with the outer atmosphere}}{\text{Total apparent volume of the fibrous assembly}}$$

According to this invention, the bulky fibrous assembly is compressed and impregnated with a resin foam chemical mixture so that the void spaces in the compressed fibrous assembly are substantially completely filled with the resin foam chemical mixture.

The degree of compression of the fibrous assembly vary depending upon the density of the fibers constituting the starting fibrous assembly, the density of the resin foam system to be impregnated, the desired content of reinforcing fibers in the final fiber-reinforced resin foam, etc. In any case, it is necessary that the compression be carried out until the volume of the void spaces in the fibrous assembly becomes substantially the same as the volume of the resin foam chemical mixture to be impregnated.

The resin foam chemical mixture to be impregnated includes those which react and foam spontaneously to form a cured resin foam. Examples include a prepolymer for the formation of a polyester foam, a mixture of a polyisocyanate component and a polyol component for the formation of a polyurethane foam and adjuvants such as a catalyst and a blowing agent (to be referred to as a "polyurethane foam chemical mixture"), and a mixture of a polyisocyanate component for the formation of a polyisocyanurate foam, adjuvants such as a catalyst and a blowing agent and optionally a modifying ingredient such as a polyol or epoxy (to be referred to as a "polyisocyanurate foam chemical mixture"). The polyurethane foam chemical mixture and the polyisocyanurate foam chemical mixture are especially suitable for the object of this invention since they permit free variations of the rate of expansion, the expansion ratio, etc. within wide ranges and can be easily obtained in viscosities suitable for impregnation into the fibrous assemblies. The process of this invention is especially suitable for the production of fiber-reinforced rigid polyurethane foams and fiber-reinforced rigid polyisocyanurate foams.

The resin foam chemical mixtures can be prepared by methods known per se which are disclosed, for example, in Saunders, J. H., and Frisch, K. C., Polyurethanes, Vol. XVI Part II, Technology, Interscience Publishers, New York, 1964, and Ferrigno, T. H. Rigid Plastics Foams, Reinhold Publishing Corporation, New York, 1963.

Polyurethane foam chemical mixtures and polyisocyanurate foam chemical mixtures suitable for use in this invention are described more specifically below with regard to their compositions and method of preparation.

(1) Polyurethane foam chemical mixture

The polyurethane foam chemical mixture can be prepared by mixing a polyisocyanate component, a polyol component, a blowing agent and a urethanization catalyst as essential ingredients. Any polyisocyanate compounds used ordinarily in the production of polyurethanes can be used as the polyisocyanate component. For example, it includes aliphatic, aromatic or aromatic-substituted aliphatic polyisocyanates compounds. Specific examples includes 4,4'-diphenylmethane diisocyanate and its alkyl homologs, 2,4- or 2,6-tolylene diisocyanate and its isomeric mixture, 1,5-naphthylene diisocyanate, hexamethylene diisocyanate, decamethylene diisocyanate, and crude tolylene polyisocyanates and crude diphenylmethane diisocyanates containing at least 3 isocyanate groups per molecule. There can also be used prepolymers having active isocyanate groups obtained by the reaction of an excessive amount of the aforesaid polyisocyanate compound with a polyhydroxy compound, and semi-prepolymers obtained by mixing such prepolymers with the aforesaid polyisocyanate compounds.

Any polyol compounds usually employed in the preparation of polyurethanes can be used as the polyol component. Suitable polyols for use in this invention are linear or branched polyols having at least two hydroxyl groups, preferably 2 to 8 hydroxy groups, per molecule and having a hydroxyl equivalent of 100 to 3000. As is well known, those polyol compounds having low functionality give flexible polyurethane foams, and those having high functionality give rigid polyurethane foams. There can also be used as the polyol component vinyl compounds or diene compounds (e.g., polystyrene, polyacrylonitrile, polyvinyl chloride, polybutadiene) having hydroxyl groups substituted at their terminals, and low-molecular-weight polyols generally called crosslinking agents such as ethylene glycol, propylene glycol, butanediol and glycerol.

The polyurethane foam chemical mixture can be prepared by adding a blowing agent and a urethanization catalyst to the polyisocyanate component and the polyol component and simply mixing these ingredients. For example, the mixing can be effected by weighing the individual ingredients into a container vessel and mixing them manually or electrically. Or the mixing can be effected by using an apparatus, usually called a foaming machine, which has the function of mechanically weighing the individual components and mixing them to form a foam chemical mixture. The mixing ratio between the polyisocyanate component and the polyol component may be generally such that the polyisocyanate component is present in the foam chemical mixture in an amount at least stoichiometrically required to react with the total number of active hydrogen atoms of the polyol component and other active hydrogen-containing compounds optionally included in the mixture.

Examples of the blowing agent used in the polyurethane foam chemical mixture are water, low-boiling hydrocarbons such as butane, pentane and hexane; and low-boiling halogenated hydrocarbons such as methylene chloride, monochlorodifluoromethane, trichloromono-fluoromethane, dichlorodifluoromethane, dichlorotetra-fluoroethane and trichlorotrifluoroethane. Suitable catalysts include, for example, tertiary amines such as triethylenediamine, triethylamine, dimethylethanolamine, dimethylcyclohexylamine, tetramethylethylenediamine, dimethylbenzylamine and morpholine, and tin compounds such as stannous dilaurate.

As is usual, the polyurethane foam chemical mixture may include other optional additives such as crosslinking agents, surface-active agents and fire retardants. Examples of the crosslinking agents are ethylene glycol, propylene glycol, propanediol, butanediol, hexanediol, dipropylene glycol and glycerol. Examples of the surface-active agent are blocked copolymers of polydimethylsiloxane and alkylene oxides, such as DC-193 (a trademark for a product of Dow Corning Co.), L-5420 (a trademark for a product of Union Carbide Corporation), YF3063 (a trademark for a product of Toshiba-Silicone Co., Ltd.), and F-305 (a trademark for a product of Shin-etsu Chemical Co., Ltd.). These additives may be used in usual amounts. For example, based on the weight of the foam chemical mixture, the blowing agent is used in an amount of about 1.0 to about 40% by weight, the catalyst in an amount of about 0.1 to about 5% by weight, the crosslinking agent in an amount of about 0.1 to about 10% by weight, and the surface-active agent in an amount of about 0.5 to about 2.0% by weight.

If desired, other additives may be incorporated in the polyurethane foam chemical mixture. Examples are fire retardants (e.g., halogenated phosphoric esters, halogenated paraffins, antimony trichloride, etc.), antioxidants (e.g., UOP-38 and UOP-288 (trademarks for products of Nippon Gasoline Co., Ltd.)), ultraviolet absorbers (e.g., Irganox 1010, a trademark for a product of Ciba-Geigy), and pigments (e.g., carbon black, Polytone Blue and Polytone Green, trademarks for products of Dainippon Ink and Chemicals. Co., Ltd.). Fillers such as wood flour, glass powder, glass microspheres, graphite and alumina hydrate may be incorporated to such an extent that they do not impair the penetration of the foam chemical mixture into the fibrous layer.

(2) Polyisocyanurate foam chemical mixture

The polyisocyanurate foam chemical mixture is a resin mixture which cures mainly by the formation of isocyanurate linkages, and as far as chemical composition is concerned, it results from the omission of the polyol component from the polyurethane foam chemical mixture and the introduction of a trimerization catalyst for the isocyanurate as an essential component.

Examples of useful trimerization catalysts are alkali metal salts of aliphatic carboxylic acids (e.g., potassium octanoate), alkali metal salts of aromatic carboxylic acids (e.g., potassium benzoate), and organic strong bases (e.g., 2,4,6-tris-(dimethylaminomethyl) phenol, 2,4,6-tris-(diethylaminomethyl)phenol, N,N',N'"-tris-(dimethylaminopropyl)-sym-hexahydrotriazine, benzyl-trimethyl ammonium oxide and sodium methoxide). Other conventional trimerization catalysts may also be used. The amount of the trimerization catalyst is not limited to a narrow range. Generally, it is suitably in the range of about 0.1 to about 10% by weight based on the weight of the foam chemical mixture.

By optionally adding a polyol compound or an epoxy compound to the polyisocyanurate foam chemical mixture, the brittleness of the resulting polyisocyanurate foam can be remedied. Suitable polyol compounds used for this purpose include trifunctional polyether polyols having a hydroxyl equivalent of 100 to 2000 resulting from the partial addition of propylene oxide and optionally ethylene oxide to glycerol to introduce secondary or primary hydroxyl groups into the terminals, polyether polyols having a hydroxyl equivalent of 100 to 150 resulting from the addition of propylene oxide to sucrose, polyether polyols having a hydroxyl equivalent of 100 to 150 resulting from the addition of propylene oxide to sorbitol, and tri- to octa-functional polyether polyols having a hydroxyl equivalent of 70 to 1000 resulting from the addition of propylene oxide to aliphatic and/or aromatic amine compounds. An epichlorohydrin-adduct of bisphenol A is an example of the epoxy compound. The preferred amount of the polyol or epoxy compound is about 5 to about 30% by weight per equivalent of the polyisocyanate used.

- 11 -

Generally, curing reaction gradually proceeds at room temperature in the polyurethane foam chemical mixture and the polyisocyanurate foam mixture described above by mixing the ingredients, although this depends upon the types of the reactants.

The time which elapses until a substantial reaction takes place (the so-called cream time) differs considerably depending upon the types of the ingredients in the foam chemical mixture, the temperature of the environment, etc. At ordinary temperatures, the cream time is preferably about 30 seconds to about 5 minutes.

The foam chemical mixture described above is impregnated into the bulky fibrous assembly before or after the fibrous assembly is compressed. In the first step, it is sufficient that the void spaces of the compressed fibrous assembly are almost completely filled with the foam chemical mixture. The impregnation of the foam chemical mixture can be effected by various methods known per se. For example, the resin foam chemical mixture is added to the fibrous assembly before compression, and then the fibrous assembly is compressed to the desired degree of compression. Or a bulky fibrous assembly is compressed within a suitable mold, and then the resin foam chemical mixture is injected into the compressed fibrous assembly. Alternatively, the bulky fibrous assembly is compressed in a closed mold, and while maintaining the inside of the mold under reduced pressure, the resin foam chemical mixture is introduced into it. What is important here is that substantially all of the void spaces present in the compressed fibrous assembly should be replaced by the resin foam chemical mixture, and no space remains substantially which is not filled with the foam chemical mixture. The term "substantially", as used herein, means that unfilled void spaces may remain to such an extent that they do not cause any problem in the use of the final resin foam. Usually, no practical trouble occurs even when up to 20% preferably up to 10%, based on the entire volume of the voids in the compressed fibrous particle are not filled with the foam chemical mixture.

When the fibrous assembly has poor wettability with the resin foam chemical mixture, the fibrous assembly may be subjected to a pre-treatment for increasing its affinity for the resin foam chemical mixture, for example, treatment with surface-active agents, drying treatment, and also to degreasing treatment with solvents depending upon the fibers.

The foam chemical mixture needs to have flowability until the void spaces present in the compressed fibrous assembly are substantially completely filled with the foam chemical mixture. However, since the impregnation of the fibrous assembly can be performed within a very short period of time, no problem arises as far as usual resin foam chemical mixtures are used.

As stated hereinabove, the degree of compression of the fibrous assembly varies depending upon the density of the fibers constituting the fibrous assembly, the density of the foam chemical mixture, the fiber content of the final fiber-reinforced resin foam, etc. However, anyone skilled in the art would be able to easily determine the required degree of compression from the densities of the starting fibrous assembly and the resin foam chemical mixture. For example, let the density of the fibers constituting the fibrous assembly be $d_g$, the density of the resin foam mixture be $d_\ell$ and the desired fiber content (by weight) in the final fiber-reinforced resin foam be $r_g$, then, the void ratio $v_g$ of the fibrous assembly after compression can be given by equation (2) below.

$$r_g = \frac{(1 - v_g)d_g}{v_g d_\ell + (1 - v_g)d_g} \tag{1}$$

- 13 -

Hence,

$$v_g = \frac{(1 - r_g)d_g}{(1 - r_g)d_g + r_g d_\ell} \qquad (2)$$

Now, a fibrous assembly composed of glass fibers having a density $d_g$ of 2.5 $g/cm^3$ and a polyurethane foam mixture having a density $d_\ell$ of 1.2 $g/cm^3$ are taken up as examples. When these density values are substituted for equation (1),

$$r_g = \frac{2.5(1 - v_g)}{1.2\,v_g + 2.5\,(1 - v_g)} = \frac{2.5(1 - v_g)}{2.5 - 1.3\,v_g} \qquad (3)$$

When equation (3) is reformulated,

$$\left(r_g - \frac{2.5}{1.3}\right)\left(v_g - \frac{2.5}{1.3}\right) = \frac{3}{1.3^2} \qquad (4)$$

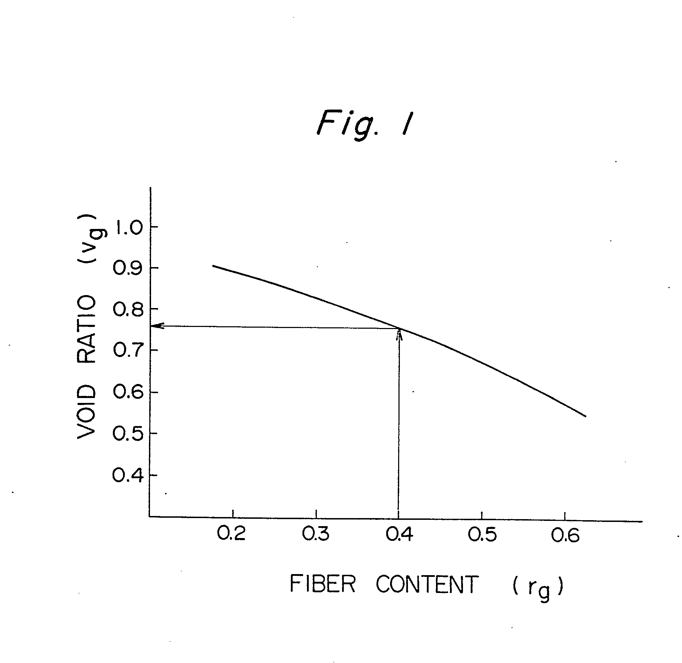

When the equation (4) is plotted on Cartesian coordinates with the ordinate representing $v_g$ and the abscissa representing $r_g$, the locus of equation (4) constitutes part of a hyperbola as shown in Figure 1 of the attached drawings.

It is seen from Figure 1 that if it is desired to produce a fiber-reinforced resin foam having a glass fiber content $r_g$ of 0.4, the starting fibrous assembly should be compressed until its void ratio $v_g$ reaches 0.76.

Thus, in the above-given specific example, one may choose a fibrous assembly having a void ratio of more than 0.76, and compress it until its void ratio reaches 0.76. If the starting fibrous assembly has a void ratio of 0.76, it may be impregnated with the resin foam chemical mixture directly without compressing it. On the other hand, a fibrous assembly having a void ratio of less than 0.76 cannot be used in the above-cited specific example.

It should be understood therefore that in the present specification and the appended claims, the expression "compressing a bulky fibrous assembly until the volume of its void spaces becomes substantially equal to the volume of a resin foam chemical mixture to be filled in said spaces void" is used to mean that it also includes the exceptional case in which the void ratio of the starting bulky fibrous assembly coincides with the desired void ratio of the compressed assembly, and no particular compressing operation is needed.

The void ratio of the bulky fibrous assembly used in the process of this invention is not particularly restricted, and may be equal to, or higher than, the desired void ratio of the assembly after compression. Suitable bulky fibrous assemblies have a void ratio of generally 0.5 to 0.9, preferably 0.6 to 0.8, in the as-compressed state.

The fibrous assembly impregnated with the resin foam chemical mixture as stated hereinabove is foamed and expanded under pressure at a rate smaller than the rate of free expansion. The term "rate of free expansion", used herein, means the rate of expansion under substantially no external pressure on the resin being expanded, such as in the case of allowing free expansion of the resin in a vessel or bag having a large opening under no external pressure. In the process of this invention, the impregnated fibrous assembly is expanded while exerting a load such that the rate of expansion becomes smaller than the rate of free expansion. As a result, with the foaming and expansion of the resin impregnated foam chemical mixture, the compressed fibrous assembly is also expanded to give a foamed product in which the reinforcing fibers are uniformly dispersed in the resin foam.

The expansion and curing of the resin foam chemical mixture can be performed usually at room temperature. If desired, the expansion may be performed under heat. This procedure can be performed by usual methods, and no special care is needed.

The pressure to be exerted on the impregnated fibrous assembly at the time of expansion varies depending

0019748

- 15 -

upon the types of the fibrous assembly and/or the resin foam, the expansion ratio desired in the final product. Generally, it can be varied widely within a range larger than the elastic recovery force of the fibrous assembly and the foaming and expanding force of the foam chemical mixture. The density and/or expansion ratio of the final foamed product can be controlled by the pressure. For example, when it is desired to obtain a final reinforced foamed product having a relatively low density by using a fibrous assembly having a low elastic recovery, a pressure of as low as about 10 $g/cm^2$ is sufficient. If, on the other hand, it is desired to obtain a reinforced foamed product having a high density by using a fibrous assembly having a high elastic recovery force or a resin foam chemical mixture having a high free expansion ratio, pressures of about 2 to 3 $kg/cm^2$ may be required. In any case, for ease of operation, lower pressures are preferred, and by selecting foam chemical mixtures of the desired expansion ratio, the pressure is preferably limited to 0.5 $kg/cm^2$ or less.

The pressure exerted on the impregnated fibrous assembly may be maintained constant during the expanding operation. Or it may be regulated so that the rate of expansion is almost constant.

The foaming and expansion of the fibrous assembly impregnated with the resin foam chemical mixture comes to an end by the termination of gas generation from the resin foam mixture, the termination of temperature rising, etc. When it is desired to stop expansion at a predetermined expansion ratio in order to obtain the desired density or expansion ratio in the final product, the expanding may be stopped by mechanical restraining. This can lead to a foamed product having a high dimensional accuracy.

As desired, the expanded resin foam is then aged at room temperature or at elevated temperatures to complete curing.

- 16 -

Thus, a resin foamed product effectively reinforced with fibers can be obtained. According to the proces of this invention, the density of the resin foam can be freely changed by properly regulating the expansion ratio of the resin foam mixture and the total expansion ratio of the fibrous assembly.

For example, let the expansion ratio of the resin foam chemical mixture be $E_f$ and the apparent density of the fiber-reinforced resin foam as a final product be $d_t$, then the total expansion ratio $E_t$ of the final product is given by the following equation (5).

The expansion ratio $E_f$ and the total expansion ratio $E_t$ have the following meanings.

$$E_f = \frac{\text{Apparent volume of the foamed resin alone}}{\text{Volume of the resin foam chemical mixture}}$$

$$E_t = \frac{\text{Volume of the fiber-reinforced resin foam}}{\text{Total volume of the resin foam chemical mixture and the fibrous assembly during compression before foaming}}$$

$$E_t = \frac{v_g d_\ell + (1 - v_g)d_g}{d_t} \qquad (5)$$

When equation (2) is substituted for equation (5),

$$E_t = \frac{d_g d_\ell}{d_t \{(1 - r_g)d_g + r_g d_\ell\}} \qquad (6)$$

$$E_t = v_g \cdot E_f + (1 - v_g) \qquad (7)$$

When equation (2) is substituted for equation (7), the following equation is derived.

$$E_f = E_t + \frac{(E_t - 1) r_g \cdot d_\ell}{(1 - r_g)d_g} \qquad (8)$$

Now, as in the above-given specific example, the use of a fibrous assembly composed of glass fibers having a density $d_g$ of 2.5 g/cm$^3$ and a polyurethane foam chemical mixture having a density $d_\ell$ of 1.2 g/cm$^3$ is taken up as an example. When these density values are substituted for equation (6).

$$E_t = \frac{2.5 \times 1.2}{d_t \{2.5(1 - r_g) + 1.2\, r_g\}}$$

$$= \frac{3}{d_t(2.5 - 1.3\, r_g)} \qquad (9)$$

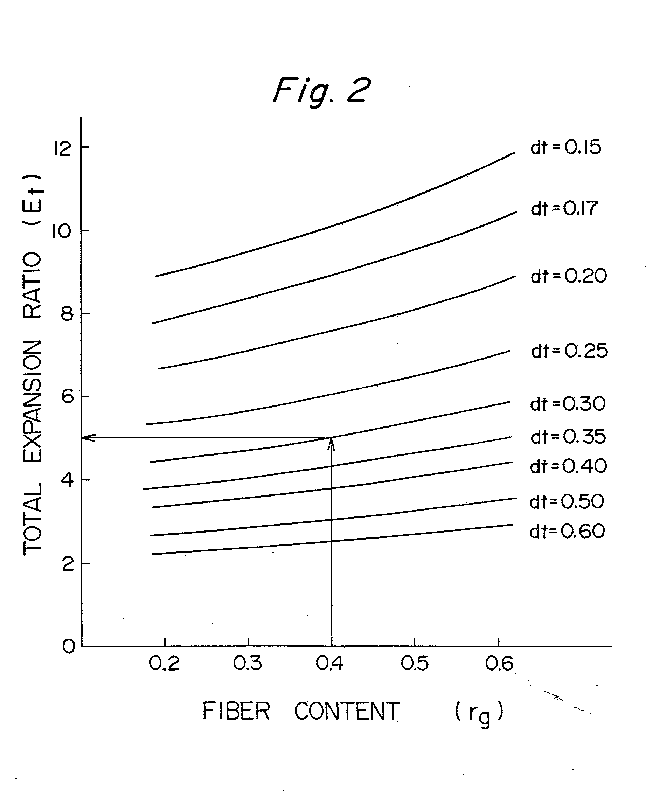

As plotted in Figure 2, the relation between $E_t$ and $r_g$ constitutes part of a hyperbola.

When the above density values are substituted for equation (8), the following equation results.

$$E_f = E_t + \frac{1.2(E_t - 1)\, r_g}{2.5\,(1 - r_g)}$$

$$= E_t + (E_t - 1)\frac{1.2\, r_g}{2.5\,(1 - r_g)} \qquad (10)$$

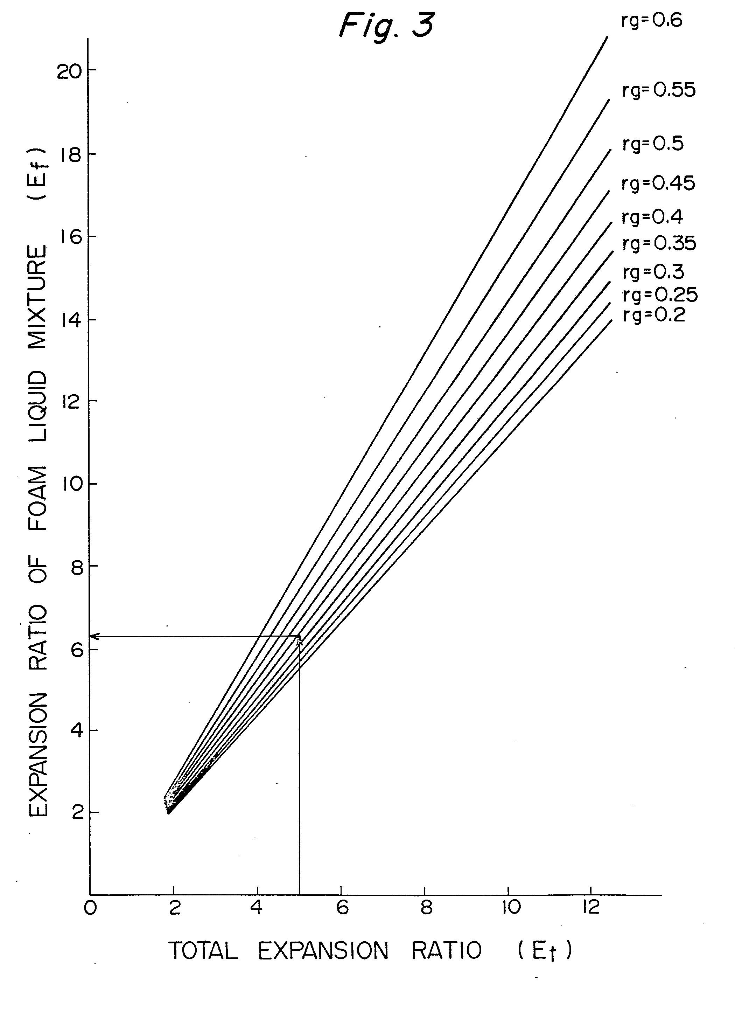

Thus, the relation between $E_f$ and $E_t$ is expressed by a straight line as shown in Figure 3.

Thus, when it is desired to obtain a glass fiber-reinforced polyurethane foam having a glass fiber content $(r_g)$ of 0.4 and an apparent density $(d_t)$ of 0.3 g/cm$^3$, a fibrous assembly of the glass fibers must be compressed until a void ratio of 0.76 is reached as shown in Figure 1. Furthermore, as is seen from Figure 2, in order to adjust the density of the final foam to 0.3 g/cm$^3$, the expansion of the resin foam chemical mixture must be regulated such that the total expansion ratio of the final foam is 5.0, and for this purpose, as is seen from Figure 3, a polyurethane foam chemical mixture having a free expansion ratio of at least 6.3 must be used.

- 18 -

Since the free expansion ratio of the resin foam chemical mixture used in this invention can be varied within the range of about 3 to about 100, preferably about 10 to about 50, the total expansion ratio of the resulting fiber-reinforced resin foam can be in the range of about 2 to about 15. As a result, a fiber-reinforced resin foam having an apparent density of about 0.05 to about 0.8 $g/cm^3$ can be obtained.

According to the process of this invention, fiber-reinforced resin foams having a very low to very high content of fibers can be produced as desired. Generally, however, those having a fiber content of about 10 to about 70% by weight, preferably about 15 to about 50% by weight, based on the weight of the reinforced resin foam, are provided conveniently.

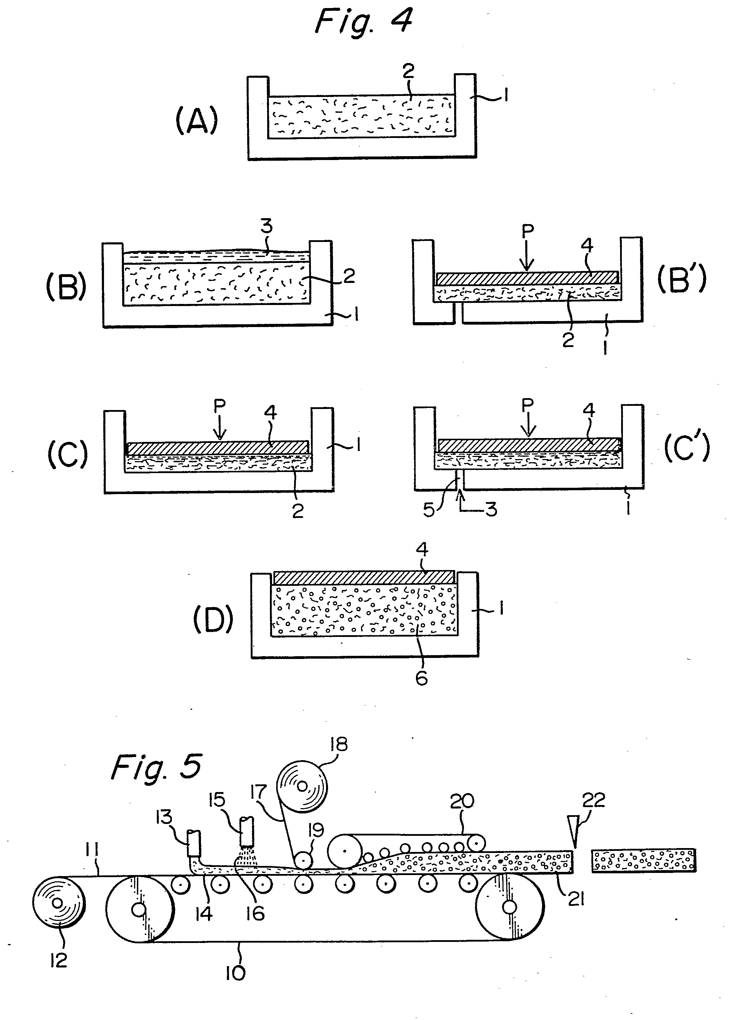

The process of this invention is specifically described with reference to the embodiments shown in Figures 4 and 5.

Figure 4 shows one embodiment of the process of this invention which is performed batchwise. First, as shown in (A), a suitable parallelpipedal mold 1 is provided, and a reinforcing fibrous assembly 2 is placed in it so that the individual fibers are distributed uniformly. Then, as shown in (b), a predetermined amount of a resin foam chemical mixture (3) is sprinkled over the surface of the fibrous assembly 2 so that it is distributed as uniformly as possible, and immediately then, a closure 4 which can be just fitted into the open portion of the mold 1 is put over the mold. A load P is exerted on the closure 4, and the fibrous assembly is compressed until the volume of void spaces in the fibrous assembly 2 becomes almost equal to the volume of the resin foam chemical mixture 3 added (Figure 4, C). Thus, the void spaces of the fibrous assembly 2 are almost completely filled with the foam chemical mixture 3. Then, the load P is reduced, and the expansion of the foaming and expansion of the foam chemical mixture begins, and with it, the fibrous assembly is also expanded. When a predetermined total expansion ratio is reached, the expansion is stopped (Figure 4, D), and the product is allowed to cure in this state.

Alternatively, the fibrous assembly 2 is placed at in the mold 1 so that the individual fibers of the assembly 2 are uniformly distributed, as shown in Figure 4, A. Then, the closure 4 is fitted in the mold 1, and the closure 4 is pressed (P) to compress the fibrous assembly 2 until its void ratio reaches a certain predetermined value (Figure 4, B'). Then, the resin foam chemical mixture 3 is injected into the mold 1 from a hole provided at the bottom of the mold 1 to fill the void spaces of the fibrous assembly 2 substantially completely (Figure 4, C'). The pressure (P) is weakened, and the resin foam chemical mixture is allowed to foam and expand and cure (Figure 4, D).

As a result, a fiber-reinforced resin foam is obtained in which the reinforcing fibers are uniformly dispersed in the foam.

Figure 5 shows one embodiment in which the process of this invention is carried out continuously. A sheet 11 which can form the undersurface of the desired resin foam is supplied from a roll 12 to a belt conveyor 10. Then, fibers are discharged onto the sheet 11 from a fiber conveying tube 13 to form a layer of a fibrous assembly 14. Furthermore, a resin foam chemical mixture 16 is sprayed onto the layer of the fibrous assembly 14 by means of a nozzle 15. Then, a sheet 17 which is to become the top surface of the desired resin foam is supplied from a roll 18 to sandwich the layer of the fiber assembly 14. The layer of the fibrous assembly 14 on which the foam chemical mixture 16 has been sprayed is compressed by a compressing roll 19 so that the foam chemical mixture evenly fills the void spaces of the fibrous assembly almost completely. The fibrous assembly impregnated with the foam chemical mixture is passed between the belt conveyor 10 and an upper conveyor 20 and foamed, expanded and cured in the space between these conveyors until its thickness reaches a predetermined level. The resultant fiber-reinforced resin foam 21 is cut to a predetermined length by a cutter 22. The above procedure affords a fiber-reinforced resin foam continuously.

A suitable surface material may be bonded to at least one surface of the foam product obtained by the process of this invention. In the aforesaid batch process, a surface material may be placed in the mold before the reinforcing fibrous assembly is supplied to the mold. In the aforesaid continuous process, the sheets 11 and 17 become surface materials. Examples of the surface material are cellulosic paper, glass paper, metal plates and plastic films. The use of surface materials increases the aesthetic appearance of the fiber-reinforced resin foam, and when both surfaces of the foam have a surface material, the strength of the product may be increased by the effect of the sandwiched structure.

If desired, the fiber-reinforced resin foam provided by this invention can be further reinforced by a reinforcing material. The reinforcing material may be a porous sheet-like material which is readily permeable to the foam chemical mixture and has relatively high mechanical strength, such as wire meshes, glass meshes, honeycomb structures made of metals, paper or plastics, and knitted, woven or nonwoven fabrics of natural, regenerated or synthetic fibers. The reinforcing material may be super-imposed on one or both surfaces of the fibrous assembly, or placed inside the fibrous assembly, prior to the impregnation of the resin foam. Thus, it is incorporated in the final fiber-reinforced resin foam, and the reinforcing material exits on the surface or the inside of the final fiber-reinforced resin foam.

In order to render the fiber-reinforced resin foam fire-retardant, a layer having an inorganic powder aggregate dispersed therein may be formed on the surface portion of the resin foam. This can be achieved by placing a layer of inorganic powdery aggregates adjacent to one or both surfaces of the fibrous assembly before the impregnation of the foam chemical mixture, thereafter applying the resin foam chemical mixture, as described above, to the fibrous assembly so that it substantially completely fills void spaces in the compressed fibrous assembly and void spaces in the layer of the inorganic powdery aggregate, and foaming and curing the foam chemical mixture under the aforesaid conditions.

The inorganic powdery aggregate used for surface fire retardation may, for example, be sand, glass beads, perlite, and vermiculite. These materials may generally have an average particle diameter of about 0.5 to about 5 mm and an apparent density of about 0.05 to about 1.0 $g/cm^3$. Desirably, this fire-retardant surface layer has a thickness of about 1 to about 10 mm. In the fire-retardant surface layer, the aggregate may be dispersed at a density of about 0.1 to about 0.8 $g/cm^3$.

Furthermore, according to the process of this invention, a laminated resin foam product composed of (A) a composite resin foam layer having a substantially uniform density throughout the layer, said layer comprising an open-cellular flexible porous material and a resin foam expanded and cured within the open cells of the porous material, and (B) a fiber-reinforced resin foam layer adjacent to the composite resin foam layer (A), said layers (A) and (B) being integrally laminated by simultaneous expansion and foaming. This product can be produced by substituting the open-cellular flexible porous material for part of the fibrous assembly described hereinabove. Specifically, the laminated resin foam can be produced by laminating an open-cellular flexible porous material and a bulky fibrous assembly, optionally superimposing a porous reinforcing sheet, compressing the laminated structure until the volume of its void spaces becomes substantially equal to the volume of a resin foam chemical mixture to be impregnated and substantially completely filling the void spaces of the laminated compressed laminated structure with the foam chemical mixture, thereafter expanding the resin foam chemical mixture at a rate smaller than the rate of its free expansion while pressing the impregnated laminated structure, and the curing the foam. The operation for this process may be quite the same as that used in the case of using only the bulky fibrous assembly.

The "open-cellular flexible porous material" used to produce the composite resin foam denotes a material composed of an assembly of numerous cells communicating with each other and having flexibility at its cell skeleton, for example a natural, regenerated or synthetic polymeric material, which can be compressed without substantially destroying its cellular structure. Specific examples of the porous material are flexible polyurethane foams, sponge rubber, sponge, viscose sponge, and polyvinyl alcohol sponge. This material has an apparent density of generally 0.01 to 0.1, preferably 0.01 to 0.05. The flexible polyurethane foams are especially suitable.

Preferably, porous materials having good affinity for the resin foam chemical mixture are chosen. It is advantageous that such porous materials have a porosity of at least 0.8, preferably at least 0.9, more preferably at least 0.95. The porosity of the porous material denotes the ratio of spaces communicating with the outer atmosphere to the total apparent volume of the porous body.

$$\text{Porosity of the porous material} = \frac{\text{Volume of spaces in the porous material which communicate with the outer atmosphere}}{\text{Total apparent volume of the porous material}}$$

- 23 -

In the resulting laminated resin foam, the ratio between the composite resin foam layer (A) and the fiber-reinforced foam layer (B) is not particularly restricted, and can be varied widely depending upon the uses of the laminated resin foam. Generally, the volume ratio of (A) to (B) is from 10:1 to 1:10, preferably from 5:1 to 1:5.

As stated hereinabove, the process of this invention can afford fiber-reinforced resin foam products by a very simple means, and the content of the reinforcing fibers can be varied over a wide range. Thus, the process of this invention is very advantageous in industry.

In the resin foam obtained by the process of this invention, the reinforcing fibers are uniformly dispersed in the resin foam, and the final reinforced resin foam has very high mechanical strength, a low thermal conductivity and a low specific gravity, and very high dimensional stability.

Accordingly, the fiber-reinforced resin foam obtained by the process of this invention is very valuable as a load-bearing member in fields which require mechanical strength, thermal insulation and light weight.

0019748

The following Examples illustrate the present invention in more detail.

Example 1

This Example illustrates the production of the batchwise production of a fiber-reinforced resin foam as shown in Figure 4.

A glass fiber surface mat having a thickness of 0.15 mm, a basis weight of 35 $g/m^2$ and a size of 200 x 200 mm (Nonwoven Glass Cloth EP-4025, a product of Japan Vilene Co., Ltd.) was placed at the bottom of a metallic mold of a rectangular shape (as shown in Figure 4) having an inside area of 200 x 200 mm and a depth of 50 mm, and eight layers of a glass filament strand mat having a thickness of 2 mm, a basis weight of 450 $g/m^2$ and a size of 200 x 200 mm (Glasslon Continuous Strand Mat M-8600-300, a trademark for a product of Asahi Fiber Glass Co,, Ltd.) were super-imposed on it. Then, 220 g of a polyurethane foam chemical mixture having the following properties and obtained by mixing solutions A and B shown below was quickly poured into the mold, and one glass filament surface mat (the same as above) was put over the top of the laminate. Then, a metallic plate having a weight of 5 kg and a size conforming to the open portion of the mold was placed over the resulting assembly. As shown in Figure 4, C, a pressure of 2 tons (5 $kg/cm^2$) was exerted on the entire surface of the metallic plate by a press to compress the fibrous assembly.

(1) Composition of the polyurethane foam chemical mixture

| Solution A:- | Parts by weight |
|---|---|
| Polyol (HR-450P, a trademark for a product of Sanyo Chemical Co., Ltd.) | 30.7 |
| Polyol (Quadrol, a trademark for a product of Asahi Denka Co., Ltd.) | 5.0 |
| Triethylenediamine | 0.06 |
| Water | 0.2 |

0019748

total weight was 353 g. The total weight of the glass fibers used was 145 g. Thus, the weight of the polyurethane foam was 208 g. The difference between the amount (220 g) of the polyurethane foam chemical mixture poured and the weight of the polyurethane foam in the final product seems to correspond to its loss of the parting line of the metallic plate.

The glass fiber content of the product was 41.1%. It is seen from Figure 3 that when the glass fiber content is 0.41 and the density is 0.35 $g/cm^2$, if the total expansion ratio is 4.9, the polyurethane foam chemical mixture substantially fills the void spaces of the glass fiber layer at the time of compression before foaming.

In the present Example, the thickness of the fibrous layer at the time of compression was 5.2, and therefore, the total expansion ratio was calculated as 4.8 (25/5.2) which corresponded well with the above calculation. Thus, the polyurethane foam chemical mixture substantially completely filled the void spaces of the glass fiber mat at the time of compression.

The physical properties of the resulting fiber-reinforced foam are shown in the table given hereinbelow.

Comparative Example 1

The same procedure as in Example 1 was repeated except that the compression of the fibrous mat layer was performed insufficiently. Specifically, the fibrous mat was compressed by exerting a pressure of 0.4 ton (1 $kg/cm^2$) on the entire surface of the metallic plate fitted in the mold. The compression brought the thickness of the fibrous mat layer to 6.5 mm. However, as calculated in Example 1, with the aforesaid degree of compression, it is seen that the void spaces of the fibrous mat layer were not substantially filled with the polyurethane foam chemical mixture.

In the resulting glass fiber-reinforced polyurethane foam, a portion into which the polyurethane component was not permeated existed at the four corners of the product, and defects of a size corresponding to an adzuki bean were observed here and there in the inside of the product.

Comparative Example 2

Example 1 was repeated except as noted below.

After the compression, the metallic plate was forcedly lifted to a height corresponding to a fiber assembly thickness of 25 mm within 10 seconds.

This Comparative Example was performed in order to determine what would happen if the polyurethane foam chemical mixture was foamed under a negative pressure by lifting the metallic plate at a higher rate than the rate of free expansion of the polyurethane foam chemical mixture.

Since the air was sucked in through the fitting part of the metallic plate, air pools were seen on the top surface of the fiber-reinforced polyurethane foam, and the appearance of the product was poor. When the cross section of the product was observed, many small voids existed in the upper layer, and the fibers tended to be localized in the lower part. Thus, the dispersibility of the fibers was poor as compared with that in Example 1.

Example 2

A fiber-reinforced polyurethane foam was produced in the same way as in Example 1 except that a fibrous assembly of the following description was used instead of the glass fiber surface mat and the glass fiber strand mat.

Fibrous assembly

Saran-Rock (a product of Sanko Keito Boseki Kabushiki Kaisha; a three-dimensional fibrous assembly composed of polyvinylidene monofilaments having a size of 800 to 1000 denier, and having a basis weight of 1.5 kg/m$^2$, a thickness of 25 mm and a size of 200 x 200 mm).

The resulting fiber-reinforced polyurethane foam had a uniform appearance, and in the inside, the polyvinylidene chloride monofilaments were uniformly dispersed three-dimensionally. Defects such as large holes were not observed at all.

The physical properties of the product are shown in the table given hereinbelow.

Example 3

Example 1 was repeated except that the depth of the mold was 150 mm, a laminated structure of three Palm-Rock of the following description was used as the fibrous assembly, and the amount of the polyurethane foam chemical mixture poured was increased to 260 g.

Fibrous assembly

Palm-Rock (a product of Sanko Keito Boseki Kabushiki Kaisha: a three-dimensional fibrous assembly composed of palm fibers and having a basis weight of 1.3 kg/m$^2$, a thickness of 50 mm and a size of 200 x 200 mm).

The resulting fiber-reinforced polyurethane foam had a uniform appearance, and in the inside, the coconut fibers were uniformly dispersed mainly in the planar direction. Defects such as large holes were not observed at all. This product could be easily worked by usual saws and planers for wood working, and could be handled in quite the same way as wooden materials.

The physical properties of the product are shown in the following table.

Example 4

As a fibrous assembly, 105 g of a glass chopped strand (Chopped Strand CS6P E, a product of Nitto Boseki Kabushiki Kaisha) having a cut length of 6 mm and a filament diameter of 13 microns was uniformly dispersed in the same mold as used in Example 1. Then, 260 g of the same polyurethane foam chemical mixture as in Example 1 was quickly poured, and the same operation as in Example 1 was repeated.

0019748

The resulting glass fiber-reinforced polyurethane foam had a uniform appearance, and was of a sandwich structure in which the glass fibers were uniformly dispersed in the inside and the skin layer was relatively dense. Defects such as large holes were not at all observed in the inside of the product.

The physical properties of the product are shown in the following table.

Example 5

The procedure of Example 1 was repeated except that a polyisocyanurate foam chemical mixture of the following composition and properties was used, and the curing conditions were changed as shown below.

The resulting glass-fiber reinforced polyisocyanurate foam had a uniform appearance, and in the inside of it, the glass fibers were uniformly dispersed and defects such as holes were not observed. The physical properties of the product are shown in the following table.

Polyisocyanurate foam chemical mixture

(1) Composition

| Solution A:- | Parts by weight |
|---|---|
| 2,4,6-tris-(dimethylaminomethyl)phenol | 3.0 |
| Cell regulator (Toray Silicone SH-193, trademark) | 1.0 |
| Freon-11 | 10.0 |
| Solution B:- | |
| Crude diphenylmethane diisocyanate (44V-20, trademark) | 86.0 |

(2) Reaction rate and expansion ratio (at 20°C)

Cream time: 40 seconds

Rise time: 4 minutes

Specific gravity: 1.2 g/cm$^3$

Free expansion ratio: 30

Curing conditions

After standing at room temperature for

0019748

30 minutes, the mold was heated at 280$^\circ$C for 1 hour while allowing it to remain closed. The mold was then allowed to cool spontaneously to room temperature. The contents were then taken out.

Example 6

A glass fiber surface mat having a size of 400 x 300 mm (the same fibrous assembly as used in Example 1) was placed in a metallic mold having a rectangular shape (as shown in Figure 4) having an inside area of 400 x 300 mm and a depth of 30 mm and a foam chemical mixture pouring opening having a diameter of 7 mm. Then, four layers of glass filament strand mat having a thickness of 2 mm, a basis weight of 600 g/m$^2$ and a size of 400 x 300 mm (Glasslon Continuous Strand Mat M-8600-600, trademark) were placed on the surface mat, and one glass fiber surface mat (the same as above) was placed on the laminated structure. At this time, the total weight of the glass fiber layer was 292 g.

A metallic plate having a size just conforming to the open portion of the mold, a thickness of 25 mm and a weight of 20 kg was placed on the laminated structure, and the fibrous layer was compressed by a 50-ton press until its thickness was reduced to 5 mm. Then, the same polyurethane foam chemical mixture as used in Example 1 was injected through the injection opening at the bottom of the mold using a high-pressure foaming machine (PU-160, a product of Krauss Maffei) under the following conditions.

Amount of extrusion: 18 kg/min.

Injecting pressure: 5 kg/cm$^2$

Injecting time: 2.0 seconds

After injection, the clamping force of the press was reduced to zero, and the fibrous layer was maintained under the load (166.6 g/cm$^2$) of the metallic plate. The fibrous mat layer gradually foamed and expanded while lifting the metallic plate. And in about 50 seconds after initiation of expansion, the thickness of the fibrous layer reached 20 mm. Then, again, a pressure was exerted on the press to restrain the position of the metallic plate. In 30 minutes, the press was released, and the resultant fiber-reinforced polyurethane foam was taken out from the mold.

The product, like the product obtained in Example 1, had a uniform appearance, and in its inside, the glass fibers were uniformly dispersed and defects such as holes were not observed at all. The product has a size of 400 x 300 x 20 mm, and a total weight of 867 g. Since the total weight of the glass fibers used was 292 g, the weight of the polyurethane foam alone was 575 g. Since the time required for the injection of the polyurethane foam chemical mixture was 2.0 seconds, calculation from the amount of extrusion shows that the amount of the polyurethane foam chemical mixture poured was 600 g. It is believed in view of a loss of the foam at the mold parting line, etc. that almost all of the polyurethane foam chemical mixture in this amount could be injected.

Accordingly, the glass fiber content of the product was 33.7%. The amount of the foam chemicals actually injected was calculated on the basis of Figure 1 and the equations given hereinabove. Since the total volume of the fibrous layer at the time of compression is 600 cm$^3$ (40 x 30 x 0.5 cm) and the total weight of the glass fibers was 292 g, the void ratio can be calculated from equation (1) as follows:

$$\frac{600 - \frac{292}{2.5}}{600} = 0.805$$

Thus, from Figure 1, the glass fiber content is determined to be 0.335. Thus, amount of the polyurethane foam chemical mixture which is required to be injected is about 508 g (292 x $\frac{0.665}{0.335}$). This can be converted to an extrusion time of 1.93 seconds ($\frac{580}{18000}$ x 60). Since actually some loss of the polyurethane foam chemical mixture occurs until it reaches the injecting opening, and burrs form, the amount of injection was set at 2.0 seconds by adding 0.07 second in the above Example.

The physical properties of the fiber-reinforced polyurethane foam obtained in this Example are shown in the following table.

Table: Physical properties of the fiber-reinforced resin foams

| Example | 1 | 2 | 3 | 4 | 5 | 6 |
|---|---|---|---|---|---|---|
| Resin foam | Poly-urethane | Poly-urethane | Poly-urethane | Poly-urethane | Polyiso-cyanurate | Poly-urethane |
| Fibers | Glass filaments | Polyvinyl-idene filaments | Palm filaments | Glass staples | Glass filaments | Glass filaments |
| Size of the product (mm) | 200x200x25 | Ditto | Ditto | Ditto | Ditto | 400x300x20 |
| Total weight (g) | 353 | 270 | 403 | 350 | 347 | 867 |
| Average density (g/cm$^3$) | 0.35 | 0.27 | 0.40 | 0.35 | 0.35 | 0.36 |
| Weight of the filler (g) | 145 | 60 | 155 | 105 | 142 | 292 |
| Filler content (%) | 41.1 | 22.2 | 38.3 | 30.0 | 40.9 | 33.7 |
| Thermal conductivity (kcal/mh$^\circ$C) | 0.025 | 0.025 | 0.031 | 0.026 | 0.026 | 0.026 |
| Compressive strength (kg/cm$^2$) | 7.7 | 13.7 | 20.2 | 5.4 | 7.0 | 8.2 |
| Flexural strength (kg/cm$^2$) | 110 | 89 | 170 | 120 | 95 | 97 |
| Tensile strength (kg/cm$^2$) | 340 | 85 | 187 | 73 | 270 | 305 |
| Charpy impact strength (no notch; kg·cm/cm$^2$) | over 33 | 18 | over 33 | over 33 | over 33 | over 33 |
| Coefficient of linear expansion ($^\circ$C$^{-1}$) | $2\times10^{-5}$ | $7\times10^{-5}$ | $3\times10^{-5}$ | $3\times10^{-5}$ | $2\times10^{-5}$ | $2\times10^{-5}$ |

0019748

Example 7

Example 1 was repeated except that a wire mesh having a size of 200 x 200 mm (stainless steel SUS24, diameter 0.914 mm, 5 mesh, plain-weave) was used instead of the glass fiber surface mat.

The resulting fiber-reinforced polyurethane foam had a reinforcing layer of the wire mesh on both surfaces, and in its inside, the glass fibers were uniformly dispersed and defects such as large holes were not at all observed.

Example 8

25 g of inorganic particles (Fuyolite #1, particle diameter 1 mm, apparent density 0.3; a product of Fuyolite Kogyo Kabushiki Kaisha) was spread to a thickness of about 2 mm on the bottom of the same mold as used in Example 1, and four layers of glass filament strand mat having a size of 200 x 200 mm (Glasslon Continuous Strand Mat M-8600-600, trademark) were superimposed on the layer of the inorganic particles. Then, 250 g of a polyurethane foam chemical mixture having the same composition as in Example 1 was quickly poured onto the fibrous mat layer in the mold. By quite the same procedure as in Example 1, a pressure of 2 tons (5.0 kg/cm$^2$) was applied to the fibrous assembly to compress it. Then, the press was quickly released and the metallic plate was fixed at a point corresponding to the fibrous layer thickness of 25 mm, and the entire structure was allowed to stand at room temperature for 30 minutes. Thirty minutes later, the resulting urethane foam with a fire-retardant surface was taken out from the mold. The product had a uniform appearance with the inorganic particles incorporated in the lower surface layer, and defects such as holes were not observed at all.

Example 9

Twenty-five grams of the same inorganic particles as used in Example 8 were spread on the bottom

0019748

of the same mold as used in Example 1. Then, 15 g of a flexible polyurethane foam (a product of Nisshin Spinning Co., Ltd.; Peach-urethane D-25, apparent density 0.025, true density 1.07) having a size of 200 x 200 mm and a thickness of 15 mm and one glass filament strand mat having a size of 200 x 200 mm (the same as that used in Example 1) were placed on the inorganic particle layer in the superimposed state. The assembly was subjected to the same operation as in Example 1. Thirty minutes later, the resultant polyurethane foam having a fire-retardant surface was taken out from the mold. The product has a uniform appearance with the inorganic particles incorporated in the lower surface layer. When the cross-section of the product was viewed, the inorganic particles were uniformly incorporated in a depth of about 2 mm in the lower surface layer. In an upper layer having a thickness of about 10 mm, the glass fibers were uniformly dispersed to reinforce the structure obtained.

Example 10

Twenty grams of a flexible polyurethane foam (Peach-urethane D-25, trademark) was placed on the bottom of the same mold as used in Example 1, and 20 g of one glass fiber stand mat (Glasslon Continuous Strand Mat M-8600-600, trademark) having a size of 200 x 200 mm was superimposed on the polyurethane foam. Then, 300 g of the same rigid polyurethane foam chemical mixture was quickly poured onto the fibrous assembly, and the fibrous assembly was subjected to the same operation as in Example 1.

The resulting laminated resin foam had a uniform appearance with only the upper layer reinforced with the glass fibers, and defects such as holes were not at all observed. The product had a size of 200 x (200 x 25) mm and a total weight of 325 g.

Since the total amount of the glass fiber mat and the flexible foam was 40 g, the weight of the hard

0019748

polyurethane foam impregnated was 285 g. The difference from the actual amount (300 g) of the rigid polyurethane foam chemical mixture poured was presumably due to the loss of the foam at the parting line of the metallic plate.

When the cross-section of the resulting partially reinforced rigid polyurethane foam was observed, the glass fibers were uniformly dispersed in an upper layer having a thickness of about 10 mm.

The composite product obtained in this Example was produced from 20 g of the rigid polyurethane foam (true density=1.07), 20 g of the glass fibers (density= 2.5) and 285 g of the rigid polyurethane foam (density of the mixed foam chemicals=1.2). Thus, if it is supposed that at the time of compression, the resin foam chemical mixture completely filled the void spaces of the laminated assembly, the volume of the laminated assembly is 264 cm$^3$ as calculated by the following formula.

$$\frac{20}{1.07} + \frac{20}{2.5} + \frac{285}{1.2} = 264$$

When this fibrous assembly is put into a mold having a size of 20 cm x 20 cm, the thickness of the fibrous assembly is calculated as 6.6 mm. However, since actually it was compressed to a thickness of about 7 mm, it can be concluded that the polyurethane foam chemical mixture almost completely filled the void spaces of the laminated assembly.

Example 11

Example 1 was repeated except that one wire mesh (stainless steel SUS24, wire diameter 0.914 mm, 5 mesh) having a size of 200 x 200 mm was inserted between the flexible polyurethane foam and the glass fiber mat.

In the resulting product, the wire mesh was incorporated in an intermediate portion, and the glass fibers were uniformly dispersed at a portion about 10 cm above the wire mesh.

Example 12

A composite resin foam having a thickness of 50 mm was obtained by the same procedure as in Example 1 except that the same mold as used in Example 3 was used; and 20 g of the same glass filament strand mat as used in Example 1 was used as the lowermost layer, the same flexible polyurethane foam (200 x 200 x 50 mm; 50 g) as used in Example 10 was used as the intermediate layer, the same Palm-Rock (200 x 200 x 50 mm, 52 g) as used in Example 3 was placed on top of the intermediate layer, and 300 g of a rigid polyurethane foam was poured.

The resulting composite was free from defects such as large holes, and was of a three-layer structure consisting of a foam layer uniformly reinforced with the glass fibers and having a thickness of about 10 mm and foam layers having a thickness of about 15 mm and uniformly reinforced with the palm fibers as both surface layers.

0019748

- 1 -

WHAT WE CLAIM IS

1. A process for producing a fiber-reinforced resin foam, which comprises compressing a bulky fibrous assembly until the volume of its void spaces becomes substantially equal to the volume of a resin foam chemical mixture to be impregnated and substantially filling the void spaces of the compressed fibrous assembly with said resin foam chemical mixture, thereafter expanding the impregnated resin foam chemical mixture at a rate smaller than its rate of free expansion while placing the fibrous assembly under pressure, and then curing the foam.

2. The process of claim 1 wherein said fibrous assembly is composed of inorganic fibers or organic fibers.

3. The process of claim 1 wherein said fibrous assembly is composed of inorganic fibers.

4. The process of claim 3 wherein said inorganic fibers are glass fibers or carbon fibers.

5. The process of claim 1 wherein said fibrous assembly is composed of fibers having a length of at least 2 mm and a size of 1 to 10000 denier.

6. The process of claim 1 wherein said fibrous assembly has a void ratio of at least 0.5.

7. The process of claim 1 wherein said resin foam chemical mixture is a polyurethane foam chemical mixture or a polyisocyanurate foam chemical mixture.

8. The process of claim 1 wherein said compressed fibrous assembly has a void ratio of 0.5 to 0.9.

9. The process of claim 1 wherein the void spaces of the compressed fibrous assembly is substantially completely filled with the resin foam chemical mixture by one of the following methods:

(a) a method comprising adding the resin foam chemical mixture to the fibrous assembly before compression, and then compressing the fibrous assembly to the desired degree of compression,

(b) a method comprising compressing said bulky fibrous assembly in a suitable mold and then injecting the resin foam chemical mixture into the mold, and

(c) a method comprising compressing said bulky fibrous assembly in a closed mold and introducing the resin foam chemical mixture while maintaining the inside of the mold at reduced pressure.

10. The process of claim 1 wherein the pressure under which the fibrous assembly is placed during the expansion is higher than the elastic recovery force of the fibrous assembly and lower than the expanding force of the resin foam chemical mixture.

11. The process of claim 1 wherein said resin foam chemical mixture has a free expansion ratio of about 3 to about 100.

12. The process of claim 1 wherein a part of the fibrous assembly is replaced by an open-cellular flexible porous material.

13. A fiber-reinforced resin foam article produced by a process according to any one of claims 1 to 11.

14. The article of claim 13 which has an apparent density of 0.05 to 0.8 $g/cm^3$.

15. The article of claim 13 which has a fiber content of about 10 to about 70% by weight.

16. A laminated resin foam article composed of

(A) a composite resin foam layer having a substantially uniform density throughout the layer, said layer comprising an open-cellular flexible porous material and a resin foam expanded and cured within the open cells of the porous material, and

(B) a fiber-reinforced resin foam layer adjacent to the composite resin foam layer (A), said layers (A) and (B) being integrally laminated by simultaneous expansion and foaming.

0019748

Fig. 1

Fig. 2

*Fig. 3*

0019748

## Fig. 4

(A)

(B)

(B')

(C)

(C')

(D)

## Fig. 5

European Patent Office · 

**EUROPEAN SEARCH REPORT**

0019748

Application number

EP 80 10 2441.5

## DOCUMENTS CONSIDERED TO BE RELEVANT

| Category | Citation of document with indication, where appropriate, of relevant passages | Relevant to claim |
|---|---|---|
| | GB – A – 1 356 441 (CONTRAVES AG ) <br> * claim 8; page 2, lines 50 to 76; <br> page 2, line 104 to page 3, line 80; <br> page 3, line 110 to page 5, line 24; <br> fig. 1 to 6 * <br> & FR – A – 2 097 164 <br> & CH – A – 525 765 <br> & CH – A – 546 635 <br> –– | 1,3,4, <br> 7,9, <br> 10,13 |
| A | GB – A – 1 416 283 (BAYER AG ) <br> * claims 1, 2, 7, 9 * <br> & DE – A – 2 307 490 <br> –– | |
| A | DE – A – 2 056 650 (BAYER AG ) <br> * claim 1 * <br> –– | |
| A | US – A – 4 148 854 (H.P. CORDTS et al.) <br> * abstract * <br> –––– | |

**CLASSIFICATION OF THE APPLICATION (Int. Cl.3)**

B 29 D   27/00

**TECHNICAL FIELDS SEARCHED (Int.Cl.3)**

B 29 D    3/02
B 29 D   27/00
B 32 B    5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X  The present search report has been drawn up for all claims

| Place of search | Date of completion of the search | Examiner |
|---|---|---|
| Berlin | 03-09-1980 | BRUCK |

EPO Form 1503.1   06.78